# EUROPEAN PATENT SPECIFICATION

(11) **EP 0 662 383 B1**
(45) Date of publication and mention of the grant of the patent: **09.09.1998**
(21) Application number: 94120585.8
(22) Date of filing: 23.12.1994
(51) Int. Cl.: B29C 45/57

(54) **Injection molding method, and injection molding machine**
Spritzgiessverfahren und Spritzgiessmaschine
Procédé de moulage par injection et machine à mouler par injection

(30) Priority: 28.12.1993 JP 334117/93; 05.09.1994 JP 211096/94
(43) Date of publication of application: 12.07.1995
(73) Proprietor: CANON KABUSHIKI KAISHA, Ohta-ku, Tokyo (JP)
(72) Inventor: Kumagai, Naohisa, Ohta-ku, Tokyo (JP); Honma, Masashi, Ohta-ku, Tokyo (JP)
(74) Representative: Weser, Wolfgang

(56) References cited:
- DE-A- 3 608 806
- US-A- 2 781 547
- PATENT ABSTRACTS OF JAPAN vol. 12 no. 257 (M-719) [3104] ,20 July 1988 & JP-A-63 041118 (MATSUSHITA ELECTRIC IND CO LTD)
- PATENT ABSTRACTS OF JAPAN vol. 7 no. 230 (M-249) [1375] ,12 October 1983 & JP-A-58 122835 (TATEISHI DENKI)
- PATENT ABSTRACTS OF JAPAN vol. 8 no. 253 (M-339) [1690] ,20 November 1984 & JP-A-59 127740 (SHIYAAPU SEIKI)

## Description

### BACKGROUND OF THE INVENTION

### Field of the Invention

The present invention relates to a technique for producing a molded article by injecting a molten resin material into a mold cavity. In particular, the present invention relates to an injection molding method and machine for producing a molded article having protrusions or the like, with a high dimensional accuracy for such protrusions.

### Description of the Related Art

A partial-compression injection molding method has been known in which ejector pins are used, as described in Japanese Patent Laid-Open No. 49-74250. According to the method, the ejector pins are retracted from the mold cavity surface, with the mold completely closed, thereby forming material accommodating spaces. Then, a predetermined amount of material is injected into the mold cavity. Before the material has solidified, the ejector pins are advanced to the mold cavity surface, with the closing pressure of the mold diminished or reduced to zero, thereby forcing the material in the material accommodating spaces into the mold cavity. After this, the mold is again completely closed under pressure. This arrangement enables even a mold cavity having a complicated configuration to be filled with material substantially up to the very end thereof in the injection process. In this way, the material can be pressurized all over, thereby making it possible to produce quality molded articles having a consistent material density.

However, in the above-described method, a fixed, predetermined compressive force is simply applied to the resin. This leads to the following problem: when an excessive compressive force is applied to the resin before the gate sealing, which is due to the cooling and solidification of the gate portion of the resin, has been completed, not only is a gate stress (internal stress) expelled from the gate portion of the resin to eliminate sinks, voids or the like therein, but a portion of resin in an amount corresponding to the compression is also expelled, with the result that the heat shrinkage after the gate sealing cannot be compensated for. On the other hand, when the compressive force applied before the gate sealing is too small, the gate sealing is allowed to take place too early, with the result that the gate stress is not completely expelled. Thus, pressure shortage occurs in the compression process after the gate sealing, so that it is difficult for the heat shrinkage to be compensated for. The proper pressure to be applied at the time of the gate sealing and the proper pressure at the time of the compression rarely coincide with each other. Further, it is not desirable, either, to put the resin under a fixed compressive force throughout the compression process since that may cause a pressure to be applied to the molded article after the solidification, thereby allowing some internal stress to remain in the article.

As a means for overcoming such a problem, an injection molding machine has been known which is capable of optimally controlling the compressive force, as described in Japanese Patent Laid-Open No. 61-83016.

The injection molding machine mentioned above comprises a hydraulic cylinder which displaces part of a mold cavity section (for example, a plunger) so as to apply a compressive force to the molten resin injected into the mold cavity to fill the same, a plurality of pressure setting devices for setting a plurality of hydraulic pressures to be supplied to the hydraulic cylinder, a signal generator which successively selects the plurality of set hydraulic pressures and emits, for an appropriate period of time, pressure command signals in conformity with the set pressures, and an electromagnetic pressure regulating valve which controls the hydraulic pressures supplied to the hydraulic cylinder in accordance with the pressure command signals. Due to this construction, the compressive force, determined in accordance with the configuration and material of the molded article, is controlled by controlling the injection pressure in multi-stages through time counting from emission of a dwell switching signal, thereby making it possible to obtain a compressive force that is most suitable for each stage of the compression process.

A study of partial compression injection molding is disclosed in the document "Molding", '93, P211. According to the method described in the study, hydraulic pressure is utilized in a mold for injection molding to force a pin into a thick-walled section, such as a rib, thereby locally eliminating sinkage due to shrinkage caused during the solidification of the resin.

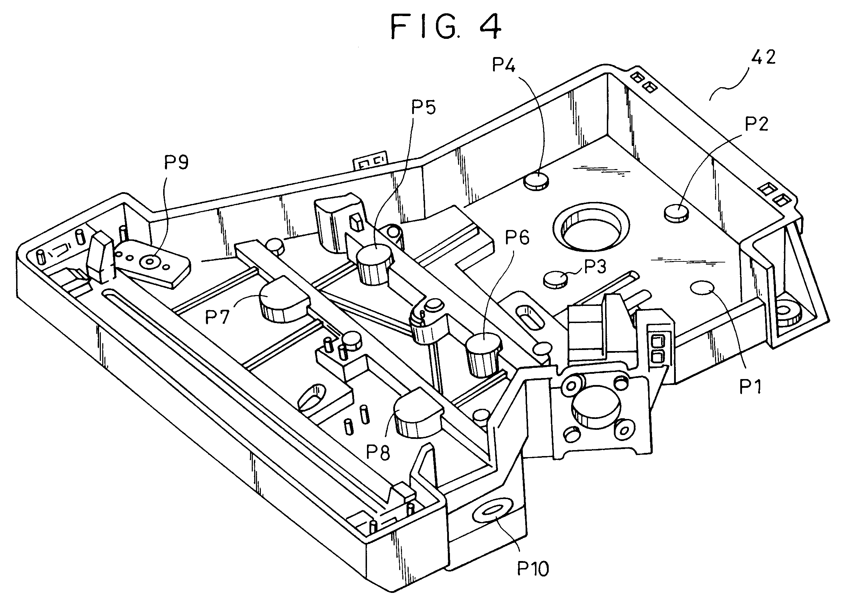

However, the conventional techniques described above are not intended for high-precision mechanism parts, such as optical parts. A mechanism part, e.g., an optical unit holding member as shown in Fig. 4, described below, requires high-precision holding sections. To obtain such a mechanism part, a mold is used which has a complicated configuration and a small gate diameter and which defines a cavity dotted with high-precision wall-thickness sections. For such a mold, the above conventional techniques have the following problems:
(1) Due to the complicated configuration, a sufficient ejection area ensuring the requisite partial ejection force is not available. Thus, although the conventional techniques can cope with the problem of shrinkage in the ejecting sections, they are not very effective in restraining the variation in wall thickness.
   The following is the reason why a variation in wall thickness is generated when a sufficient ejection area is not available:
   Compression injection molding is often employed for the purpose of obtaining a satisfactory transfer of the precision of molds for lenses, optical discs and the like. In compression injection molding, a considerable portion (usually 50 to 90%) of the cavity area is ejected with a single ejecting section (a plunger), as in the case of the method described in Japanese Patent Laid-Open No. 61-83016.
   For an optical holding member as shown in Fig. 4 or the like to be obtained, the die cavity must be partly dotted with high-precision wall-thickness sections. It must also be dotted with sections for ejection by pins or the like. In such a case, the ejecting force is not transmitted to the cavity end through the resin, which is somewhat cooled after the filling and is in a semi-solid state, in contrast to the case where the entire molding cavity surface is pressed. Thus, the orientation of the internal die pressure cannot always be regarded as ideal, but rather tends to exhibit a poor reproducibility for the entire warpage.
(2) In view of this, to restrain the variation in dimensional precision at the time of molding, it is necessary to increase the absolute internal die pressure to achieve an increase in resin density and an improved transferability. Thus, the injection pressure (the internal die pressure) must be increased. As a result, a large clamping force is required in addition to the ejecting force. In order to restrain the variation in precision at the time of molding, the cooling time might be set to be relatively long. However, that would lead to a long molding cycle.
(3) However, when the injection pressure is increased for the purpose of ensuring the requisite interior die pressure, there is the following problem: when the gate diameter is small, the internal-die-pressure difference gradient between a section near the gate and a section spaced far from it becomes large, and the gradient does not remain the same for each molding, so that the warpage amount is not stable but varies. That is, when there is a different gradient in internal die pressure in the semi-solid resin in the die cavity, an unevenness in density is generated in the resin in the cavity, with the result that the internal stress of the resin after solidification is uneven, resulting in the warpage amount of the molded product taken out of the mold being unstable.
(4) Further, as compared with a simple, thick-walled molded article like a lens, a complicated, high-precision mechanism part has a relatively small wall thickness, and the mold temperature for it is set to be low to shorten the cycle, so that it is necessary to increase the injection speed for the purpose of filling the mold with resin up to the end of the cavity before the resin has solidified to a considerable degree. In this process, there is not sufficient time for the large amount of gas generated from the filling resin and the air in the cavity to escape from the cavity during the injection, with the result that the injection speed varies or cannot be controlled, resulting in burning, burrs or unstable dimensional accuracy. In view of this, it is necessary to correctly set the requisite clamping force in accordance with the projected area of the molded article and the requisite internal die pressure so that the gases may be allowed to smoothly escape without requiring any extra clamping force.
   Under the circumstances, when the ejecting force is controlled in terms of time, there is the following problem: when a low pressure is used throughout the stage of molding process from the completion of the resin injection to the gate sealing, which stage is most important in obtaining a compression effect by ejection, a high compression effect cannot be obtained in the case of partial ejection (partial compression) due to the small ejecting force. On the other hand, using a high pressure would, together with the injection pressure, cause the mold to open, thereby causing burrs to be generated.
(5) At the same time, in the case of a part having a complicated configuration like the one being discussed, the amount of resin injected is large, so that the diameter of the injection cylinder is also large. As a result, the variation in metering is relatively large as compared with that in the case of a relatively small object like a lens, which is produced by using an injection cylinder having a relatively small diameter. The variation in metering (of the amount of resin injected) exerts a direct influence on the positional control in the case of a method in which the ejecting position is mechanically controlled since in this case the cavity volume is always kept constant. As a result, it is impossible to keep the density of the resin in the cavity constant, which leads to an unstable dimensional accuracy, generation of burrs, and so on.

From the JP-A-63 041118 and from the JP-A-58 122835 it is known to prevent shrinkage of a molded article produced by injection molding of resin material. In order to prevent shrinkage at a boss portion, these documents propose a method wherein pressure is applied to a part of a cavity which forms the boss portion to prevent partial shrinkage of the molded article having protrusions which require high accuracy at their surfaces, as for instance an optical unit holding member for an image forming apparatus which requires very high accuracy on the support surface thereof, especially at the plane for holding an optical unit having optical parts such as mirrors.

In the DE-A-36 08 806 it is proposed to correct shrinkage of resin material by means of a pin urged by a spring and arranged at a runner. Resin pressure is controlled during injection and cooling by adjusting the capacity of the injection cavity. For that purpose pressure means (springs and pins) are provided at a runner portion and injected resin material is cooled and the fluidity thereof decreases while the resin material moves in the cavity in contact with the surface of a mold member. Further, since the thickness of the injection gate is smaller, resin at the gate solidifies faster. Therefore, the pressure of the springs is not sufficiently applied in the direction to the injection cavity. In addition, in the pressure mechanism through the sprue runner resin material begins to solidify as time passes after the injection so that a sufficient compression effect of the resin cannot be expected.

The US-A-2781547 teaches to prevent shrinkage of resin material by controlling the cooling step of the molding method.

In a similar manner as described above shrinkage is corrected in accordance with the JP-A-59 127740 by applying pressure partially to the resin material by a spring. The embodiment shown in Fig. 2 of this document is directed to a method for applying pressure to the whole part of a core bush member which per se has a relative simple form. This known method, however, is not suited to mold an article of a complex form having protrusions which require high accuracy at their surfaces.

### SUMMARY OF THE INVENTION

The present invention has been made in view of the above problems in the prior art. It is an object of the present invention to provide a compression injection molding method and machine which make it possible to mitigate the warpage, to reduce the variation in wall thickness, to shorten the molding cycle, and to reduce the requisite clamping force by decreasing the requisite internal die pressure even in the case of the molding of a complicated, high-precision mechanism part. The present invention is directed to a method as defined in claim 1 and a machine as defined in claim 5.

Further, the present invention is applicable to a case where a component of a business machine which is required to have a high level of accuracy, for example, a holding member for holding an optical unit of an image forming apparatus, is molded by using a resin material.

Further, according to the present invention, protrusions to which parts are to be attached and which are required to have a high level of dimensional accuracy, are formed on a molded article produced by using a die cavity defined by stationary and movable mold parts, wherein, prior to the solidification of the resin material injected into the cavity, a pressing action is exerted on those portions of the resin material in the cavity which are in the vicinity of the above-mentioned protrusions so as to increase the density of those portions of the resin, thereby providing a molded article whose dimensional accuracy can be guaranteed even in the resin-material cooling process.

To achieve the above object, the present invention proposes an injection molding method which uses pressing members arranged in a molding cavity surface of a cavity defined by stationary and movable mold parts, and urging members arranged in the molding cavity surface and urged at a fixed pressure. An injection gate is closed after a predetermined amount of resin material has been injected into the cavity. Before closing the injection gate, however, the pressing members are pressed in the direction of the interior of the cavity so as to displace the resin material in the cavity against the urging force of the urging members to thereby uniformalize the resin material inside the cavity.

Further, the present invention can be used for producing a molded article having protrusions for holding optical components as in the case of an optical unit for a business machine as mentioned above, wherein pressing members protrude from the molding cavity surface for forming the above-mentioned molded article so as to be positioned at the above-mentioned protrusions. After the resin material has been injected into the cavity, the pressing members are pressed to displace the resin material and to increase the pressure of those portions of the resin which are near the protrusions to thereby increase the density of the resin material forming the above-mentioned protrusions, thereby eliminating deformation of the protrusions in the resin cooling process.

The injection molding machine of the invention may also be one comprising an ejecting device for driving ejector pins which serve to eject the molded article and which are forced into the resin filling the cavity, the cavity being partly dotted with high-precision wall-thickness sections for forming the thick-walled sections of the molded article. The precision pins are provided in correspondence with the high-precision wall-thickness sections of the cavity, the precision pins being forced into the cavity by the ejecting device and by a predetermined ejection amount, and
wherein a control unit is provided which adjusts the ejecting force of the precision pins in accordance with the ejection amount as measured from an ejection start position such that the control unit enlarges the ejecting force of the precision pins when this ejection amount is smaller than the above-mentioned predetermined ejection amount, gradually diminishing it as it approaches the predetermined ejection amount, and that the control unit diminishes the ejecting force of the precision pins or reduces it to zero when the ejection amount as measured from the ejection start position exceeds the above-mentioned predetermined ejection amount, thereby effecting a multi-stage or stageless control so as to maintain the above-mentioned predetermined ejection amount.

In this case, the above-mentioned ejecting device consists of a hydraulic cylinder device, and the above-mentioned control unit may be one equipped with a measuring means for reading the projection amount of a rod of the hydraulic cylinder device, the pressure of the oil supplied to the hydraulic cylinder device being adjusted in accordance with the value read from the measuring means.

According to the present invention, constructed as described above, the following improvement is achieved: in the prior art, when the mold is completely closed by pressing and the cavity is filled with resin injected into it, the pressure in the section near the gate is higher than the pressures in the sections spaced apart from the gate especially when the cavity has a complicated configuration partly dotted with high-precision wall-thickness sections for forming thick-walled sections in the molded article and the gate diameter is small, as in the case of a high-precision mechanism part. In such a case, a pressure in excess of the set internal die pressure is concentrated in the vicinity of the gate. However, when, as in the present invention, urging pins are provided near the gate, the forward ends of these urging pins retreat from the molding cavity surface against a pressing force of a pressing means pressing the urging pins with the same pressure as the set internal die pressure such that the forward ends of the urging pins are positioned in the same plane as the molding cavity surface. As a result, an increase in the cavity volume occurs near the gate, so that the concentration of pressure in the vicinity of the gate is suppressed, so that the unevenness in cavity internal pressure difference is eliminated even though an ejection area large enough to eliminate such unevenness cannot be secured due to the presence of the high-precision wall-thickness sections with which the cavity is dotted. Further, in a case where a large amount of resin must be injected (metered) due to the complicated cavity configuration, the diameter of the injection cylinder must also be large, with the result that there is a variation in the amount of resin injected (metered) for each molding. According to the present invention, however, the urging pin retreat when the pressure inside the cavity exceeds the set internal die pressure, so that the volume of the cavity can vary so as to keep the density of the resin in the cavity constant.

Further, in the prior art, when the ejecting device is driven to press the resin filling the cavity by ejector pins, precision pins also press the high-precision wall-thickness sections, with which the interior of the cavity is partly dotted, by a predetermined ejection amount. At this time, the resin has started to cool and is in a semi-solid state, so that the pressing force is not sufficiently transmitted to the farthest end of the cavity, as compared to the case where the entire cavity is pressed, resulting in the orientation of the interior die pressure being partly uneven. However, in such a case also, this unevenness is eliminated by the operation of the urging pins mentioned above. Further, due to the operation of the above-mentioned urging pins, it is also possible to eliminate the unevenness in the cavity internal pressure difference due to the variation in balance between the pressure of the injection from the gate and the ejecting force locally exerted on high-precision sections with which the cavity is partly dotted.

In this way, when compression molding is executed, the internal die pressure is always uniformalized by the action of the urging pins. Thus, it is possible to mitigate the warpage due to the complicated cavity configuration, the variation in wall thickness due to the influence of the warpage, and so on. Further, while in the prior art the injection pressure must be enlarged before the variation in precision can be restrained, and, consequently, a large clamping force is required in addition to the ejecting force, it is possible, in the present invention, for the clamping force of the clamping device to be the minimum value required. At the same time, there is no need for the cooling time to be relatively long in order to restrain the variation in precision, and the cooling time can also be set at the minimum value required. Thus, it is also possible to shorten the molding cycle as compared to that in the prior art.

### BRIEF DESCRIPTION OF THE DRAWINGS

Fig. 1 is a sectional view showing the essential parts of an injection molding machine according to the present invention;
Fig. 2 is a diagram showing another example of an urging means constituting an essential component of the present invention;
Fig. 3 is a control block diagram of an apparatus according to the present invention;
Fig. 4 is a perspective view of an optical unit holding member according to the present invention;
Fig. 5 is a diagram illustrating the construction of an optical unit;
Fig. 6 is a sectional view of an optical unit holding member produced by a conventional process and apparatus;
Fig. 7 is a sectional view of an optical unit holding member according to the present invention;
Fig. 8 is an operation flowchart for a molding machine according to the present invention;
Fig. 9 is a diagram showing another example of urging means 12;
Fig. 10 is a sectional view showing the essential components of another example of an apparatus according to the present invention;
Fig. 11 is a control block diagram for the apparatus shown in Figs. 9 and 10;
Fig. 12 is an operation flowchart for the apparatus shown in Figs. 9 through 11; and
Fig. 13 is a diagram illustrating how the resin pressure in a molded article is uniformalized according to the present invention.

### DESCRIPTION OF THE PREFERRED EMBODIMENTS

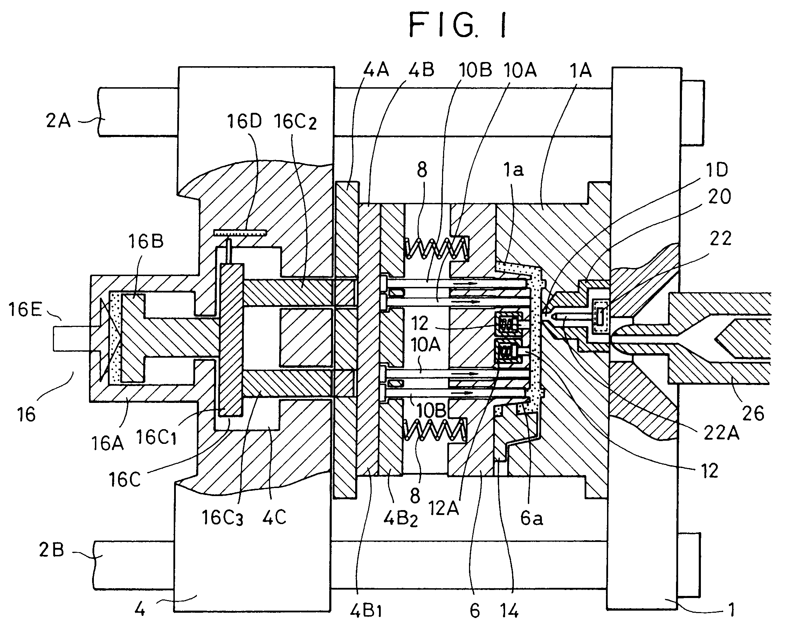

Fig. 1 is a sectional view of the essential parts of a molding machine according to the present invention, showing the structural features of the molding machine.

In Fig. 1, numeral 1 indicates a stationary member (a stationary platen) secured to the machine body (not shown); numeral 1A indicates a stationary mold part attached to the stationary member mentioned above; and numeral 1a indicates a molding cavity surface of the stationary mold part 1A.

Numerals 2A and 2B indicate guide members for a movable mold part secured to the machine body.

Numeral 4 indicates a movable member (a movable platen) guided by the guide members 2A and 2B. A movable bottom plate 4A and an ejector plate 4B are attached to the movable platen 4.

The ejector plate 4B is composed of a plurality of sections: first and second ejector plates 4B₁ and 4B₂.

Numeral 6 indicates the movable mold part. The movable mold part 6 is attached to the ejector plate 4B through the intermediation of return springs 8. Numeral 6a indicates a molding cavity surface of the movable part. The molding cavity surface 6a forms the molding cavity together with the molding cavity surface 1a of the stationary mold part.

Numerals 10A and 10B indicate ejector pins, which extend through the second ejector plate 4B₂ and the movable mold part 6. In this example, two pairs of ejector pins are incorporated into the machine, each pair consisting of two pins 10A and 10B.

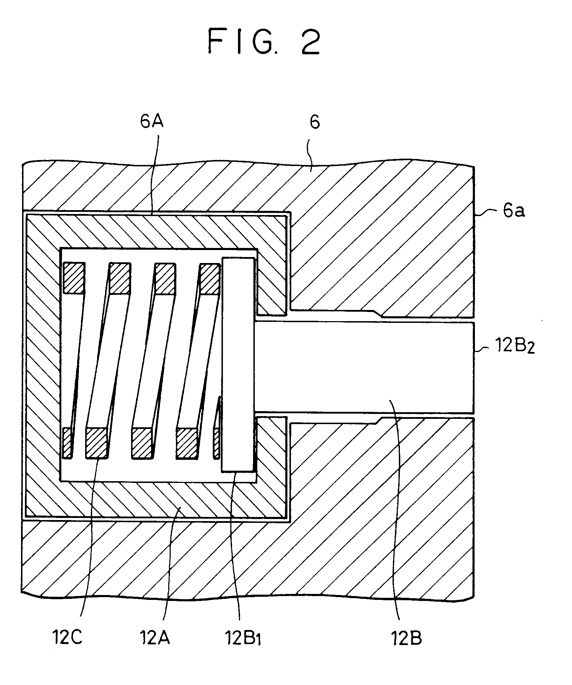

Numeral 12 indicates urging means provided near the gate and adapted to uniformalize the pressure of that portion of the resin material in the cavity which is near the gate when the resin material is displaced by being pressed by the ejector pins. Fig. 2 illustrates the construction of the urging means.

In Fig. 2, numeral 12A indicates a casing. The casing 12A is fitted into a cutout groove 6A formed in the movable mold part 6. Numeral 12B indicates an urging member (pin). One end of the urging member 12B is formed as a flange section 12B₁ that is accommodated in the casing mentioned above. The other end portion of the urging member 12B, indicated at 12B₂, appears on the molding cavity surface 6a of the movable mold part due to the action of an urging spring member 12C provided in the casing.

Referring again to Fig. 1, numeral 14 indicates a slide mold member, which defines the molding cavity together with the stationary mold part 1A and the movable mold part 6. The slide mold member 14 performs opening and closing operations, by a well-known slide means (not shown), simultaneously with the opening and closing of the movable mold part.

Numeral 16 indicates an ejector pin driving means, which comprises a cylinder block 16A attached to the movable platen 4, a piston rod 16B provided in the cylinder block 16A, an ejector rod 16C accommodated in a cutout groove 4C formed in the movable platen 4 and adapted to drive the ejector plate 4B, and so on.

The ejector rod 16C is composed of a receiver 16C₁ which receives the pressure of the piston rod 16B, and rod members 16C₂ and 16C₃ for transmitting the pressure of the receiver 16C₁ to the ejector plate.

A hydraulic mechanism 16E for driving and controlling the piston rod 16B is connected to the cylinder block 16A.

Numeral 16D indicates a means for detecting the displacement position of the ejector rod 16C. In this example, the means consists of a linear encoder attached to the inner surface of the above-mentioned cutout groove of the movable platen.

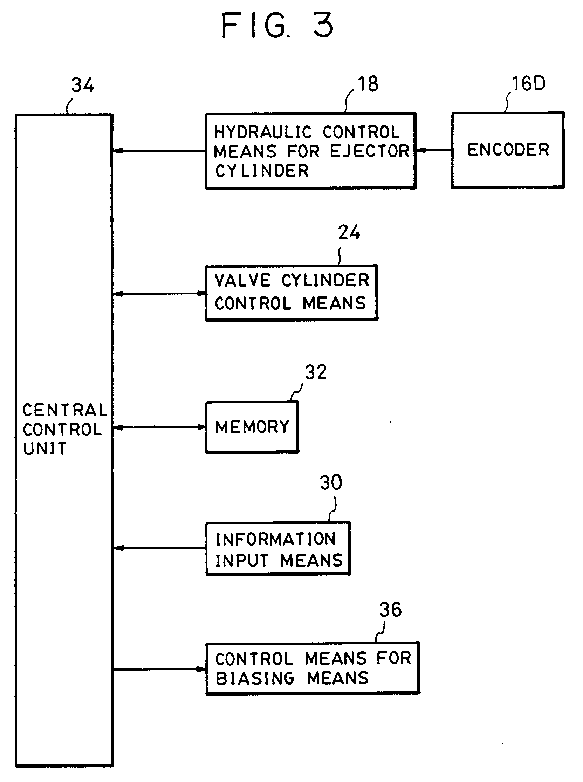

The ejector pin driving means 16 is connected to a hydraulic control means 18 (Fig. 3).

Numeral 20 indicates a hot runner, in which a valve cylinder 22 is arranged. The valve cylinder 22 operates a valve pin 22A to open and close the gate section 1D of the stationary mold part.

The valve cylinder 22 is connected to a cylinder control means 24.

Numeral 26 indicates an injection cylinder connected to the stationary platen.

Fig. 3 shows a control unit for the molding machine shown in Fig. 1. As stated above, the ejector cylinder control means 18 drives and controls the ejector driving means 16.

The valve cylinder control means 24 controls the valve cylinder 22.

Numeral 30 indicates an input means for inputting data consisting of control information for this molding machine. The input information is stored in a memory 32.

Numeral 34 indicates a control means which controls the operation of the entire molding machine and performs the operations as set forth in the control flowchart described below.

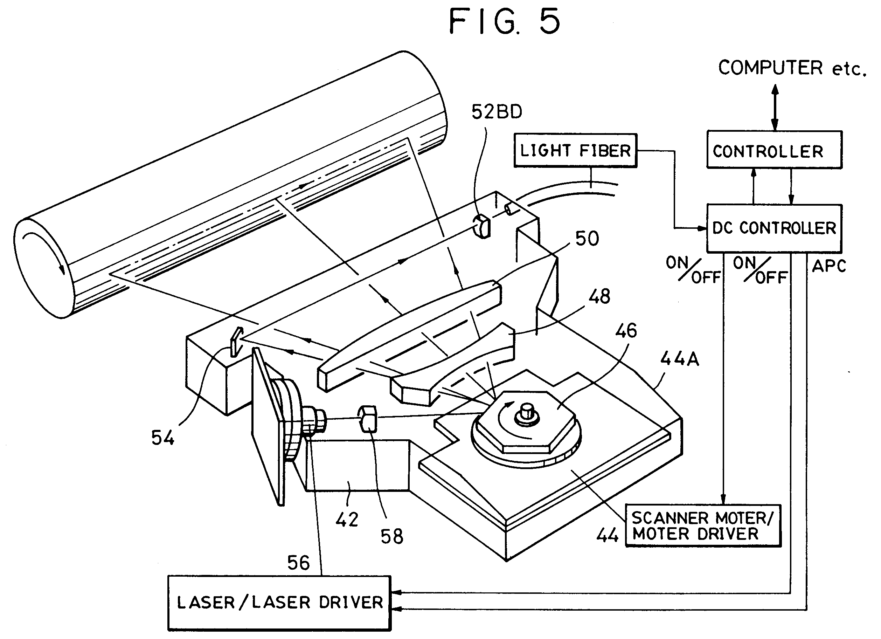

Figs. 4 and 5 show an optical unit 40 for use in an image forming apparatus. The optical unit 40 includes an optical unit holding member, which is an example of the molded articles produced by the molding method of the present invention.

Fig. 4 is a perspective view of an optical unit holding member 42 (an optical box) for accommodating and holding the optical unit shown in Fig. 5.

As shown in Fig. 5, the optical unit 40 comprises a scanner-motor/motor-driver 44, a polygon mirror 46, a spherical lens 48, a toric lens 50, BD lenses 52 and 54, a semiconductor-laser/laser-driver 56, a cylindrical lens 58, the optical unit holding member 42 for accommodating and holding these components, and so on.

In the optical unit 40 shown in Fig. 5, the surface of a photosensitive drum is scanned with a laser beam applied thereto from the laser driver 56 through the spherical lens 48 and the toric lens 50 as the the polygon mirror 46 rotates. When there is a variation in accuracy in terms of the mounting positions of the components held in the optical unit holding member 42, and, in particular, when there is a dimensional variation in the mounting positions with respect to a reference mounting surface of the holding member, the accuracy in the scanning of the laser beam is deteriorated, resulting in deterioration in the accuracy in the image transfer onto the photosensitive drum. Thus, a very high level of accuracy must be guaranteed with respect to the respective mounting positions of the components on the optical unit holding member.

In the perspective view of Fig. 4, showing the optical unit holding member, areas P1 through P4 are the mounting positions for the above-mentioned motor-scanner/motor-driver 44. A holding plate 44A for the motor driver 44 is secured to these four areas.

Areas P5 and P6 constitute the attachment position for the spherical lens 48, and areas P7 and P8 constitute the attachment position for the toric lens 50.

Areas P9 and P10 constitute the mounting positions for the BD lens 52 and the mirror 54, respectively.

These mounting sections, shown as the areas P1 through P10, are formed as protrusions from the reference surface at the bottom of the holding member 42. When an optical unit holding member having the cavity configuration as shown in Fig. 4 is produced by injection molding by a conventional apparatus which is not based on the molding method and apparatus of the present invention, and cooled and withdrawn from the mold, a dimensional error of approximately ±0.02 mm is generated in the distance between the upper surface of each protrusion, constituting a mounting position, and the above-mentioned bottom surface with respect to the design value.

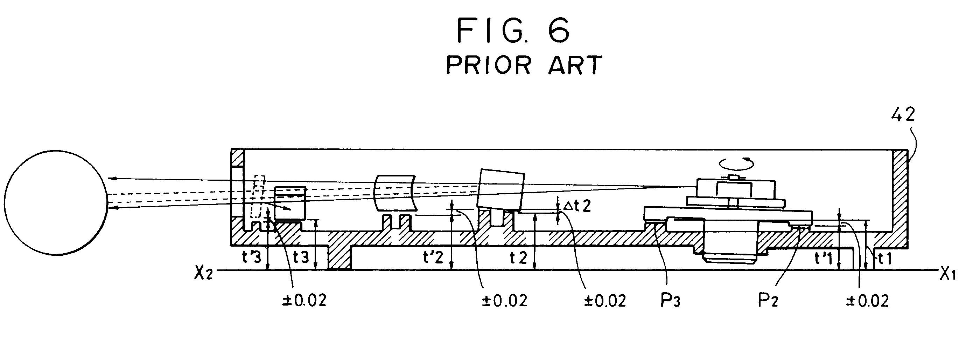

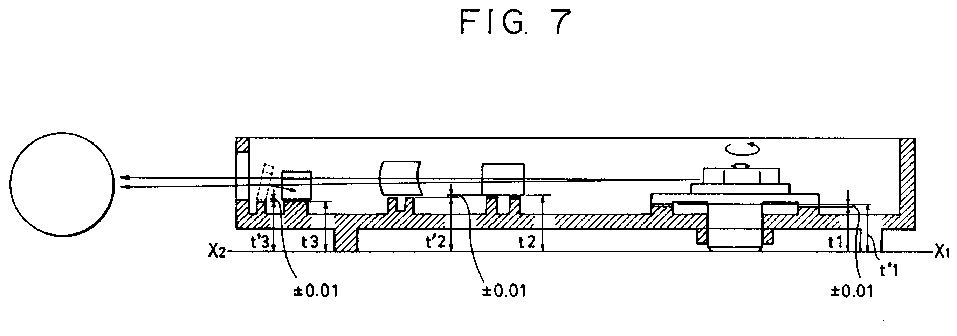

The reason for the necessity of a strict dimensional accuracy regarding the wall thicknesses of the protrusions P1 through P10 will be explained below with reference to Figs. 6 and 7.

Fig. 6 is a sectional view showing the essential parts of an optical unit holding member produced by a conventional method.

Referring to Fig. 6, in the protrusions P1 through P4 for holding the polygon mirror 46, a difference of ±0.02 mm is generated between the respective height dimensions t₁ and t₁' of the upper surfaces of these protrusions as measured from the reference level X₁-X₂ for the holding member 42 on the machine body.

A difference of ±0.02 mm is also generated between the height dimensions t₂ and t₂' of the protrusions for mounting the spherical lens, between the height dimensions of the mounting protrusions for the toric lens, and between the height dimensions of the mounting protrusions for the BD lens.

These differences in dimension in the protrusions are attributable to the residual stress when the resin is cooled in the cavity of the molding machine.

The above error of ±0.02 mm in terms of wall thickness dimension generates an error in the mounting angles for the optical parts constituting the optical unit, resulting in a deformation, such as distortion or inclination, of the laser spot image on the photosensitive drum, output from the laser light source and transmitted by way of the polygon mirror 44, the spherical lens 48, the toric lens 50, etc. Further, this error leads to an increase in the laser spot diameter to thereby cause a deterioration in resolution.

Fig. 7 is a sectional view of an optical unit holding member produced by the apparatus and method of the present invention, shown in Fig. 1.

According to the present invention, it is possible to control the errors in the height dimensions t₁, t₁', t₂, t₂' t₃, t₃' within a range of ±0.01 mm.

With this range of dimensional error, i.e., ±0.01 mm, the distortion and inclination of the image is reduced to 1/2 as compared with the case of Fig. 6, thereby minimizing the image deformation.

Further, the error in lens mounting angle is also reduced to 1/2 in the case of a small spot diameter which is in excess of 600 dpi (dots per inch) for a high-resolution image, thereby making it possible to obtain a desired resolution.

Thus, reducing to half the dimensional error in the wall thicknesses of the protrusions constituting the component mounting positions for the optical unit holding member 42 as described above is very important in improving the accuracy of the image forming apparatus.

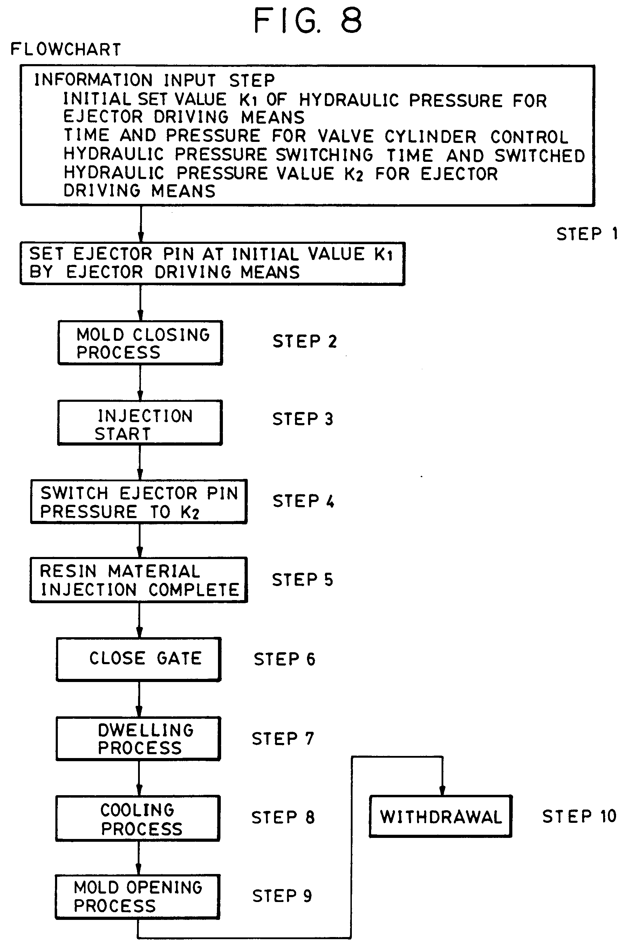

Next, an example of the way the optical unit holding member 42 is formed by the above molding machine and molding method will be described with reference to the flowchart of Fig. 8.

The resin material used for the molding was one containing thermoplastic resin, e.g.., polycarbonate, as the main ingredient, with some filler like glass fiber mixed therein.

In Fig. 4, the number of protrusions, P1 ∼ P10, is ten or more, and all the pins 10, arranged at the positions of these protrusions, function as both ejector pins and internal pressure imparting means.

First, information corresponding to the wall thickness dimensions of the protrusions, which constitute the molding conditions for the optical unit holding member 42, is input at the input means mentioned above.

This input information mainly includes:
Melting point of the resin material, injection amount, load value for the mold closing means (not shown);
initial set value K₁ of the hydraulic pressure for the ejector driving means;
control information (timing and pressure) for the control means 24 for the valve cylinder 22;
set load value K₂ for the hydraulic control means 18 to move the resin, and the timing of switching from K₁ to K₂;
the above-mentioned set load value for the hydraulic control means 18 and ejection pressure K₃ for molded article withdrawal and timing thereof;
amounts of movement of the ejector pins 10A and 10B, and so on.

In this embodiment, the movable mold part is designed such that the protrusions of the holding member 42 are set at positions where the ejector pins abut against them.

First, the above input information is input in accordance with the design information regarding the resin material and the optical unit holding member to be molded (step 1).

Then, the movable platen is moved to close the mold (step 2).

In this condition, the valve gate is kept open, and the hydraulic means is set at the initial set value K₁.

Next, the resin is injected into the molding cavity from the injection cylinder 26 (step 3). The cavity is thus filled with a predetermined amount of resin injected into it, such that the resin is pressed against the forward end surfaces of the ejector pins 10A and 10B and those of the urging members 12B.

The internal die pressure in the cavity at this time is 300 to 600 Kgf/cm².

Prior to the completion of the injection of the predetermined amount of resin, and after the elapse of a set period of time input to the input means 30, which set period of time is within the period in which the resin material can flow, the hydraulic cylinder is operated by the hydraulic control means 18, and the signal of the linear encoder 16D is input to the control means 34 to control the hydraulic pressure of the hydraulic means to the value K₂ so as to move the ejector pins 10A and 10B in the direction of the cavity (step 4).

The pressure for switching the hydraulic pressure of the hydraulic means from K₁ to K₂, in step 4, is set at a pressure which causes the ejector pins 10A and 10B to be displaced by approximately 0.1 mm to 1.0 mm.

As a result of this operation, those portions of the resin material in the cavity which are in the vicinity of the ejector pins 10A and 10B undergo an increase in internal resin pressure, with the result that the density of these resin portions increases.

The springs 12C of the urging pins 12 are set such that the springs impart a pressure which allows the pins 12B₂ to maintain the balanced positions when the resin is injected into the cavity and the resin internal pressure acts on the pins 12B₂. In this way, the internal resin pressure in the cavity is adjusted.

After this, the operation of injecting a predetermined resin material is completed (step 5).

Then, the valve cylinder is operated by the valve cylinder control means 24 to close the valve gate (step 6).

This allows the resin in the cavity to be subjected to the dwelling process (step 7).

Subsequently, a cooling process is started in which the molded article in the cavity is cooled through mold-coolant-passage effected by a cooling means (not shown) (step 8).

After the elapse of a predetermined cooling time, the operation of opening and closing the movable platen is conducted (step 9).

Simultaneously with the opening and closing of the movable platen, the slide mold member is also opened and closed.

Subsequently, the withdrawal of the molded article is conducted by the operation of the ejector cylinder control means 18 (step 10).

Through the above steps 1 through 10, the molding process is completed.

In the molding cavity for the optical unit holding member 42, shown in Fig. 1, the injection gate, which is on the Stationary-mold-part side, is positioned between the ejector pins 10, which are arranged in the cavity portion on the movable-mold-part side, and the urging members. This arrangement constitutes one of the factors contributing to the improvement in the accuracy of the above-mentioned protrusions.

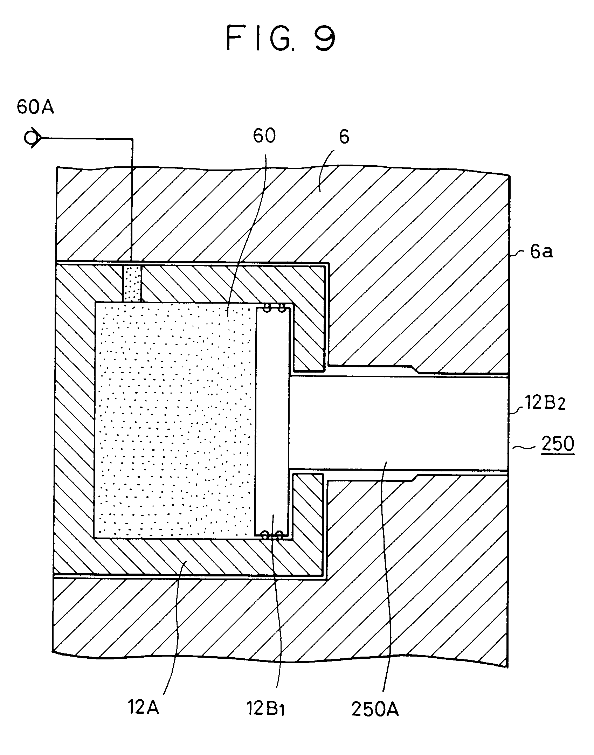

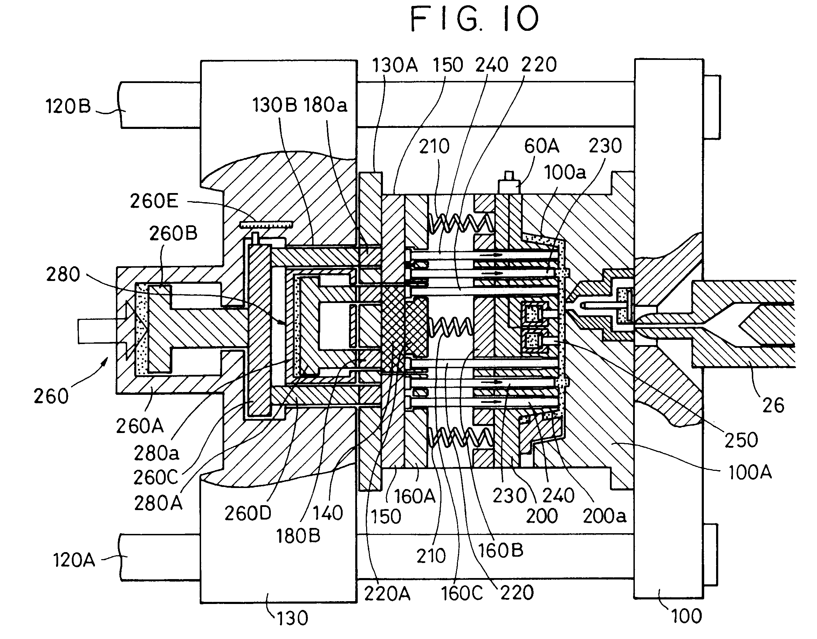

Fig. 9 shows an embodiment in which the urging means 12 consists of a hydraulic means, and will be described in more detail below with respect to the injection mold shown in Fig. 10.

While in the embodiment of Fig. 1 the ejector pins 10, constituting the ejector means, are used also as the means for imparting internal pressure to the resin material injected into the molding cavity, it is naturally also possible to adopt pressing means other than the ejector pins 10 as the internal pressure imparting means for the resin material.

Fig. 10 shows the construction of such other means.

In Fig. 10, numeral 100 indicates a stationary member (a stationary platen) secured to the apparatus body (not shown); numeral 100A indicates a stationary mold part attached to the above-mentioned stationary member; and numeral 100a indicates the molding cavity surface of the stationary mold part.

Numerals 120A and 120B indicate movable-mold-part guide members fastened to the apparatus body.

Numeral 130 indicates a movable member (a movable platen) guided by the guide members 120A and 120B. Attached to the movable platen 130 are a movable bottom plate 130A, an ejector pin operating plate member 140, a press pin operating plate member 150, a press pin holding member 160A, and a return spring holding member 160B.

Included in the movable bottom plate 130A are a driving plate member 180a that is driven by a piston of an ejector driving means 280, described below, and a driving plate member 180B that is driven by a piston 260B of a press pin driving means 260 described below.

The driving plate member 180a is joined to the press pin operating plate member 150, and the driving plate member 180B is joined to the ejector pin operating plate member 140.

Numeral 200 indicates a movable mold part adapted to be opened and closed through movement of the movable-side mounting plate member 130. The movable mold part 200 has a molding cavity surface 200a.

Numeral 210 indicates return springs stretched between the press pin holding member 160A and the return spring holding member 160B.

Numeral 220 indicates ejector pins for thrusting the molded article out of the mold. One end of each ejector pin 220 is joined to the ejector pin operating plate member 140, whereas the other end of each ejector pin 220 extends through the ejector pin holding plate member 220A, the return spring holding plate member 160B, and the movable mold part 200 to appear in the molding cavity surface 200a.

Numeral 160C indicates a spring stretching between the ejector pin holding plate 220A and the return spring holding plate 160B and serving to return the ejector plate 220A.

Numeral 230 indicates press pins. Each press pin 230, one end of which is joined to the press pin operating plate member 150, extends through the press pin holding member 160A and the return spring holding member 160B. The other end of each press pin 230 appears in the molding cavity surface 200a so as to be in alignment with the position of the corresponding protrusion in the molded article.

Numeral 240 indicates press pins. One end portion of each press pin 240 is joined to the press pin operating plate member 150, and extends through the press pin holding member 160A and the return spring holding member 160B. The other end of each press pin 240 appears in the molding cavity surface 200a.

The press pins 240, serve to uniformalize the density of the resin material at positions where the internal resin pressure in the molded article formed by the cavity is lowered and where warpage and sinkage are generated to a large degree, and are provided at positions where it is necessary to prevent such warpage and sinkage.

Numeral 250 indicates urging means having a function similar to that of the urging means of the apparatus of the embodiment shown in Fig. 1.

Each urging means 250 has a pin member 250A one end of which appears in the above-mentioned molding cavity surface. The pin member 250A is driven by a hydraulic cylinder provided in the movable mold part member 200.

The construction of the hydraulic cylinder 60 is the same as that of Fig. 9.

The hydraulic cylinder 60 is driven and controlled by a hydraulic control means 60A.

Numeral 280 indicates an ejector driving means. The ejector driving means 280 comprises a cylinder case 280a arranged in a cutout 130B that is formed in the movable platen 130, a piston 280A, a hydraulic pipe (not shown) that is connected to the cylinder case 280a, and so on. The ejector driving means 280 drives the ejector pin operating plate member 140 by the piston 280A through the intermediation of the second ejector pin operating plate member 180B.

Numeral 260 indicates a press pin driving means, which operates the press pins 230 and 240.

The press pin driving means 260 comprises a cylinder case 260A attached to the movable platen 130, a piston 260B provided in the cylinder case, coupled driving members 260C and 260D, and so on.

The coupling members 260C and 260D are arranged in the cutout 130B for the movable platen 130, in the space positioned on the outer side of the cylinder case 280a, the coupling members 260D being coupled to the compression member driving plate member 180a.

Numeral 260E indicates an encoder for detecting the displacement amount of the piston 260B of the press pin driving means.

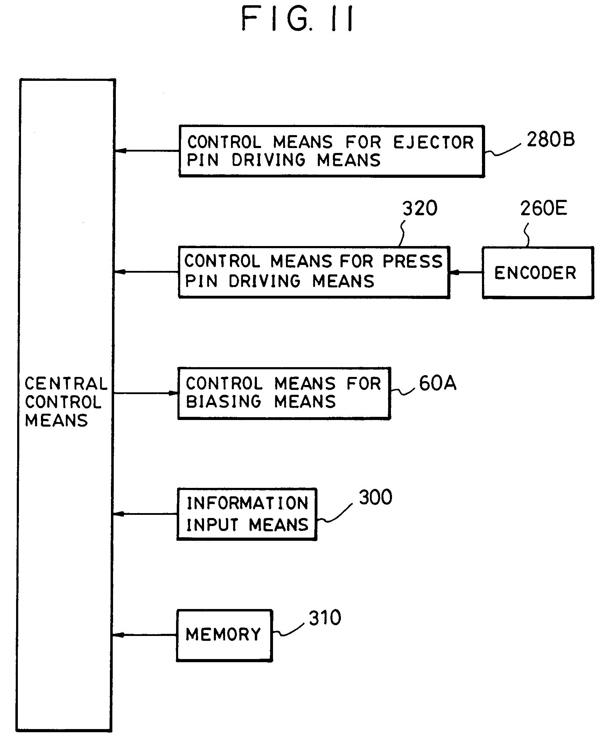

Fig. 11 is a control block diagram of the apparatus shown in Fig. 10.

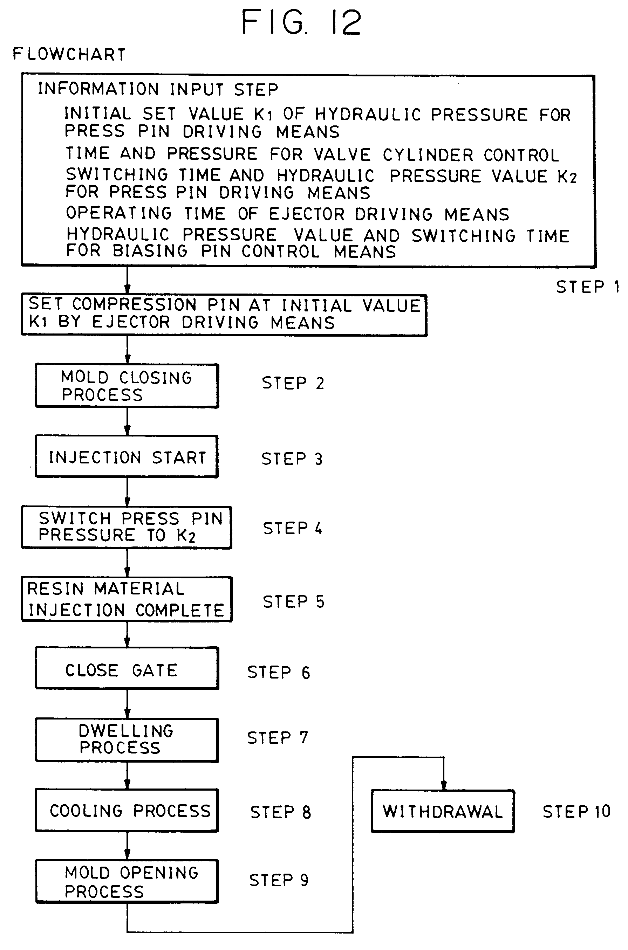

Next, the operation of the apparatus shown in Figs. 10 and 11 will be described with reference to the flowchart of Fig. 12.

In this embodiment, the above-mentioned urging pins are displaced by the hydraulic means 60, so that information is input and set at the information input means 300 such that the urging pressure and displacement timing for the urging pins are controlled by the hydraulic control means 60A, the above-mentioned information being input to the memory 310.

Further, control information for the ejector pin control means 280B for controlling the control pressure and timing of the ejector pin driving means 280 for driving the ejectors 220, is input and stored.

Control information for the press pin driving/controlling means 320 for controlling the cylinder pressure and timing of the press pin driving means 260 for displacing the press pins 230 and 240, is input and stored.

The principal items of the input information in this embodiment includes:
melting point of the resin material, resin injection amount, timing for the mold opening/closing means, load value, timing for the ejector pin control means, pin pressure, pin displacement amount, control timing and pressure for the press pins,
initial and switched pressures for the urging pins 250, operational timing for the control means 60A, and so on.

First, on the basis of design information regarding the resin material and the molded article, i.e., the optical unit holding member, the above information is input (step 1), and then the movable platen is displaced to perform mold clamping (step 2). This mold clamping is controlled by a positional signal from the linear encoder (not shown) that is attached to the movable platen.

In this condition, the above-mentioned valve gate is kept open, and the press pin driving means 320 is set to the initial set value K₁.

Then, resin is injected from the injection cylinder 26 into the molding cavity (step 3). The molding cavity is thus filled with a predetermined amount of resin such that the resin is pressed against the end surfaces of the ejector pins 220, the press pins 230 and 240, and the urging members 250.

The internal die pressure in the cavity at this time is 300 to 600 Kgf/cm².

Prior to the completion of the injection of the predetermined resin, and after the elapse of a set period of time input to the input means 300, which is within the period in which the resin material is fluid, the press pin driving means 260 is operated, and the signal from the linear encoder is input to the control means 320 to control the hydraulic pressure of the press pin control means 320 to the value K₂ to displace the press pins 230 and 240 in the direction of the cavity (step 4).

The pressure for switching the hydraulic pressure of the hydraulic means from K₁ to K₂ in step 4 is set at a pressure which causes the press pins 230 and 240 to be displaced by approximately 0.1 mm to 1.0 mm.

When resin is injected into the cavity and the internal pressure of the resin acts on the urging pins, the hydraulic control of the urging means 250 is effected to adjust the pressure such that the urging pins maintain the balanced position, whereby the internal pressure in the cavity is adjusted.

As a result of this operation, those portions of the resin material in the cavity which are near the press pins 230 and 240 are pressed by the press pins 230 and 240, with the result that the internal pressure of the resin in the cavity rises in regions around these portions, and the density of these resin portions increases.

After this, the injection of the predetermined amount of resin material is completed (step 5).

Subsequently, the valve cylinder is operated by the valve cylinder control means to close the valve gate (step 6).

Then, the resin in the cavity is subjected to a dwelling process (step 7).

Subsequently, the molded article in the cavity is subjected to a cooling process by mold coolant passage (step 8). After the elapse of a predetermined length of cooling time, a movable-platen opening/closing operation is conducted by the mold opening/closing means (step 9).

With this movable platen opening/closing operation, the opening/closing of the slide mold is also effected.

Subsequently, the withdrawal of the molded article is conducted by the operation of the ejector cylinder control means 280B (step 10).

In the case of the embodiment shown in Figs. 9 through 12, the control of the pressure of the biasing means 250 is effected by hydraulic control, whereby the pressure of the urging pins is accurately controlled, thereby making it possible to obtain a molded article with an improved level of precision.

Further, apart from the ejector pins 220, the resin in the cavity is pressed and displaced by the press pins 230 and 240 to uniformalize the resin through the control of the press pin control means 320, so that a still higher level of accuracy can be ensured.

Consequently, an injection molding method is shown in which pressing members are arranged in a molding cavity surface defined by stationary and movable mold parts, and urging members urged at a fixed pressure are provided in the molding cavity surface. After a predetermined amount of resin material has been injected into the mold cavity, the injection gate is closed. Then, the pressing members are pressed in the direction of the interior of the cavity so as to displace the resin material in the cavity against the urging force of the urging members, thereby uniformalizing the resin material in the mold cavity.

This method makes it possible to produce a holding member for an optical unit for image formation with an optical part attached thereto, e.g., a lens, such that protrusions for holding the optical unit can be formed with high dimensional accuracy.

In particular, the variation in the wall thickness dimensions of the protrusions can be restrained to a low level, thus providing a molding method which can limit to a minimum the dimensional errors in the mounting positions for the parts constituting the optical unit.

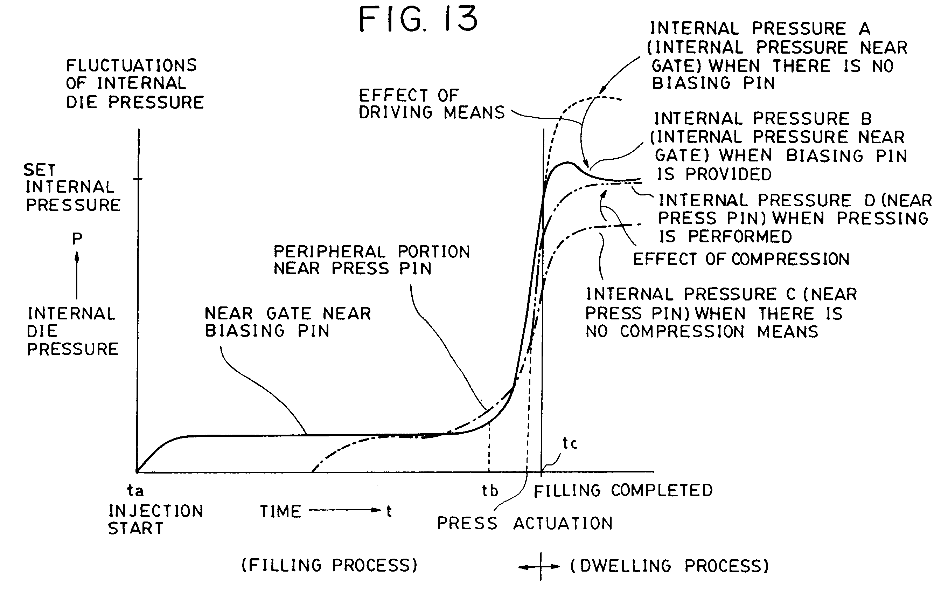

Fig. 13 is a diagram showing how the internal die pressure in a molded article produced by the molding method of the present invention varies.

The horizontal axis indicates time as measured from the start of injection, and the vertical axis indicates the internal die pressure.

First, when no urging means 12 is provided, the resin injected into the cavity fills the cavity, and, as the filling proceeds, the internal pressure of the cavity increases rapidly, as indicated by line A, and the difference in internal pressure between the central portion and the end portion of the cavity at the time tc, at which the filling of the resin material is completed, attains a very large value.

This difference in internal pressure cannot be eliminated even in the dwelling process, causing warpage and sinkage in the resin in the cooling process.

Curve B indicates the internal die pressure near the gate when the urging means is provided. In this case, the internal pressure increases as the cavity is filled to a higher degree with the resin material injected into it, and, at the time when the filling is completed, the internal pressure of the resin material is adjusted by the reactive force of the urging pins to become lower as compared with that in the case of curve A. Thus, the pressure in the molding cavity is uniformalized, thereby attaining an improvement in terms of dimensional accuracy for the cavity protrusions.

Curve C represents the internal pressure in a case where the urging means 12 is provided but there are no press pins. In this case, the internal die pressure in the peripheral section is substantially lower than the set internal pressure.

Curve D represents the internal pressure in the case of the apparatus according to the embodiment of Fig. 10. When both the press and ejector pins are provided, the difference in internal die pressure between the central and peripheral portions of the cavity is further diminished, and a more remarkable uniformalization in the density distribution of the resin material is attained, thereby making it possible to obtain a molded product exhibiting high dimensional accuracy.

Thus, the present invention provides a molding method suitable for producing a molded article having protrusions for holding parts, as in the case of an optical unit for a business machine as mentioned above. According to the method, pressing members protrude from the molding cavity surface for producing a molded article as mentioned above so as to be positioned in alignment with the above-mentioned protrusions. After the injection of the resin material in the cavity, the pressing members are pressed so as to displace the resin material to increase the pressure of the resin portions near these protrusions, thereby enhancing the resin material density near the protrusions so as to make it possible to obtain a molded article that is free from deformation caused in the resin cooling process.

Further, in accordance with the present invention, the injection gate is closed after the injection of the resin material into the cavity, and, after that, the resin material in the cavity is pressed, whereby the filling density of the resin material in the protrusions of the molded article is enhanced to minimize the deformation of the protrusions, thereby making it possible to limit the dimensional errors in the plurality of protrusions to a minimum.

In an embodiment of the present invention, the ejector pins for extracting the molded article also serve as the pressing means 10, thereby simplifying the construction of the apparatus.

Further, in the apparatus of the present invention, it is also possible to execute the function of the ejector pins and that of the means for pressing the resin after the injection by separate means.

When such separate means are used, it is possible to adopt a construction in which the setting of the pressing force of the pressing means can be arbitrarily changed, so that any change in the pressing force due to changes in the molding conditions, such as the kind of resin material and molding temperature, can be well coped with.

## Claims

1. An injection molding method for producing a molded article having surface regions of high accuracy, in particular protrusions, by means of an injection molding apparatus having a stationary mold part (1A, 100A) and a movable mold part (6, 160), a molding cavity (1a, 100a) defined therebetween and injection means (26) disposed at said stationary mold part for injecting a predetermined amount of resin material into said molding cavity via an injection gate (1D), said method comprising the steps:
- increasing the internal pressure of the resin material injected into the molding cavity at those resin portions where said high accuracy surface regions are to be made, by pressing means (10, 250) arranged in the molding cavity surface to increase the density of said resin material portions, and
- controlling the internal pressure of the resin material injected into the molding cavity by urging means (12, 250) which are arranged in the molding cavity surface and located proximate the injection gate to uniformalize the pressure at that portion of the resin material.

2. An injection molding method according to claim 1, wherein the urging means (12, 250) are adapted to impart a fixed pressure to the resin material.

3. An injection molding method according to claim 1 or 2 for forming a molded article (42) for an image forming apparatus.

4. An injection molding method according to claim 3 for forming the molded article in form of an optical unit holding member.

5. An injection molding machine for producing a molded article having surface regions of high accuracy, in particular protrusions, by means of an injection molding apparatus having a stationary mold part (1A, 100A) and a movable mold part (6, 160), a molding cavity (1a, 100a) defined therebetween and injection means (26) disposed at said stationary mold part for injecting a predetermined amount of resin material into said molding cavity via an injection gate (1D), characterized in that
- urging means (12, 250) are arranged on the movable mold part in the cavity surface proximate to the injection gate for controlling the internal pressure of the resin material to uniformalize the pressure at that portion of the resin material, and
- pressing means (10, 230) are arranged on the movable part in the cavity surface for increasing the internal pressure of the resin material injected into the molding cavity at those resin portions where said high accuracy surface regions are to be made, so as to increase the density of said resin material portions.

6. An injection molding machine according to claim 7, wherein the pressure means (10, 230) comprise pressure pins which are hydraulically actuated.

7. An injection molding machine according to claim 5 or 6, wherein the pressure means (10, 230) are integrated with ejector means.

8. An injection molding machine according to claim 5, 6 or 7, wherein the urging means (12, 250) are adapted to impart a fixed pressure to the resin material.

9. An injection molding machine according to any one of claims 5 to 8, wherein the urging means (12, 250) comprise pins (12B) forced into the molding cavity by springs (12C).

## Patentansprüche

1. Spritzgießverfahren zur Herstellung eines Gusskörpers mit Oberflächenbereichen hoher Genauigkeit, insbesondere Vorsprüngen, mittels einer Spritzgießvorrichtung mit einem stationären Formteil (1A, 100A) und einem bewegbaren Formteil (6, 160), einer zwischen diesen bestimmten Formkavität (1a, 100a) und einer am stationären Formteil angeordneten Einspritzeinrichtung (26) zum Einspritzen einer vorbestimmten Menge von Harzmaterial in die Formkavität über eine Einspritzöffnung (1D), wobei das Verfahren die Schritte aufweist:
- Erhöhen des Innendrucks des in die Formkavität eingespritzten Harzmaterials in jenen Harzabschnitten, wo die Oberflächenbereiche hoher Genauigkeit auszubilden sind, durch eine in der Oberfläche der Formkavität angeordnete Preßeinrichtung (10, 230) zur Erhöhung der Dichte der Harzmaterialabschnitte und
- Steuern des Innendrucks des in die Formkavität eingespritzten Harzmaterials durch eine Druckausübungseinrichtung (12, 250) die in der Oberfläche der Formkavität vorgesehen und benachbart der Einspritzöffnung angeordnet ist, um den Druck in jenem Bereich des Harzmaterial zu vergleichmäßigen.

2. Spritzgießverfahren nach Einspruch 1, wobei
die Druckausübungs-einrichtung (12, 250) so ausgebildet ist, daß sie auf das Harzmaterial einen fixierten Druck ausübt.

3. Spritzgießverfahren nach Anspruch 1 oder 2
zur Ausbildung eines Gusskörpers (42) für eine Bilderzeugungsvorrichtung.

4. Spritzgießverfahren nach Anspruch 3
zur Bildung des Gusskörpers in Form eines Halteelementes für ein optisches Bauteil.

5. Spritzgießvorrichtung zur Herstellung eines Gusskörpers mit
Oberflächenbereichen hoher Genauigkeit, insbesondere Vorsprüngen, mittels einer Spritzgießvorrichtung mit einem stationären Formteil (1A, 100A) und einem bewegbaren Formteil (6, 160), einer zwischen diesen bestimmten Formkavität (1a, 100a) und einer am stationären Formteil angeordneten Einspritzeinrichtung (26) zum Einspritzen einer vorbestimmten Menge von Harzmaterial in die Formkavität über eine Einspritzöffnung (1D), dadurch gekennzeichnet, daß
- eine Druckausübungseinrichtung (12, 250) am bewegbaren Formteil in der Oberfläche der Kavität nahe der Einspritzöffnung zur Steuerung des Innendrucks des Harzmaterials vorgesehen ist, um den Druck in jenem Bereich des Harzmaterials zu vergleichmäßigen, und
- eine Preßeinrichrung (10, 230) am bewegbaren Teil in der Oberfläche der Kavität zur Erhöhung des Innendrucks des in die Formkavität eingespritzten Harzmaterials in jenen Harzabschnitten vorgesehen ist, wo die Oberflächenbereiche hoher Genauigkeit auszubilden sind, um die Dichte der Harzmaterialabschnitte zu erhöhen.

6. Spritzgießvorrichtung nach Anspruch 5, bei der
die Preßeinrichtung (10, 230) hydraulisch betätigte Druckstifte aufweist.

7. Spritzgießvorrichtung nach Anspruch 5 oder 6, bei der
die Preßeinrichtung (10, 230) mit Ausstoßmitteln integriert ist.

8. Spritzgießvorrichtung nach Anspruch 5, 6 oder 7, bei der
die Preßeinrichtung (12, 250) so ausgebildet ist, daß sie auf das Harzmaterial einen fixierten Druck ausübt.

9. Spritzgießvorrichtung nach einem der Ansprüche 5 bis 8, bei der
die Druckausübungseinrichtung (12, 250) Stifte (12B), die durch Federn (12C) in die Formkavität gedrückt werden, aufweist.

## Revendications

1. Procédé de moulage par injection pour produire un article moulé ayant des régions de surface de haute précision, en particulier des saillies, au moyen d'un appareil de moulage par injection ayant une partie de moule fixe (1A, 100A) et une partie de moule mobile (6, 160), une cavité de moulage (1a, 100a) définie entre elles et des moyens d'injection (26) disposés à ladite partie de moule fixe pour injecter une quantité prédéterminée de matière du type résine dans ladite cavité de moulage par l'intermédiaire d'une entrée (1D)) d'injection, ledit procédé comprenant les étapes dans lesquelles :
- on élève la tension interne de la matière de ladite résine injectée dans la cavité de moulage dans les parties de la résine où lesdites régions de surface de haute précision doivent être réalisées, à l'aide de moyens (10, 230) d'application de pression disposés dans la surface de la cavité de moulage pour augmenter la densité desdites parties de matière du type résine, et
- on règle la pression interne de la matière du type résine injectée dans la cavité de moulage par des moyens de sollicitation (12, 250) qui sont disposés dans la surface de la cavité de moulage et situés à proximité de l'entrée d'injection afin d'uniformiser la pression à cette partie de la matière du type résine.

2. Procédé de moulage par injection selon la revendication 1, dans lequel les moyens de sollicitation (12, 250) sont destinés à appliquer une pression fixe à la matière du type résine.

3. Procédé de moulage par injection selon la revendication 1 ou 2, pour former un article moulé (42) pour un appareil de formation d'images.

4. Procédé de moulage par injection selon la revendication 3, pour former l'article moulé sous la forme d'un élément de maintien d'un bloc optique.

5. Machine de moulage par injection pour produire un article moulé ayant des régions de surface de haute précision, en particulier des saillies, au moyen d'un appareil de moulage par injection ayant une partie de moule fixe (1A, 100A) et une partie de moule mobile (6, 160), une cavité de moulage (1a, 100a) définie entre elles et des moyens d'injection (26) disposés à ladite partie de moule fixe pour injecter une quantité prédéterminée de matière du type résine dans ladite cavité de moulage par l'intermédiaire d'une entrée d'injection (1D), caractérisée en ce que
- des moyens de sollicitation (12, 250) sont disposés sur la partie de moulage mobile dans la surface de la cavité à proximité de l'entrée d'injection pour régler la pression interne de la matière du type résine afin d'uniformiser la pression à cette partie de la matière du type résine, et
- des moyens (10, 230) d'application de pression sont disposés sur la partie mobile dans la surface de la cavité pour élever la pression interne de la matière du type résine injectée dans la cavité de moulage dans les parties de la résine où lesdites régions de surface de haute précision doivent être réalisées, afin d'augmenter la densité desdites parties de matière du type résine.

6. Machine de moulage par injection selon la revendication 7, dans laquelle les moyens (10, 230) d'application de pression comprennent des broches de pression qui sont actionnées hydrauliquement.

7. Machine de moulage par injection selon la revendication 5 ou 6, dans laquelle les moyens (10, 230) d'application de pression sont intégrés avec des moyens éjecteurs.

8. Machine de moulage par injection selon la revendication 5, 6 ou 7, dans laquelle les moyens (12, 250) de sollicitation sont destinés à appliquer une pression fixe à la matière du type résine.

9. Machine de moulage par injection selon l'une quelconque des revendications 5 à 8, dans laquelle les moyens (12, 250) de sollicitation comprennent des broches (12B) introduites à force dans la cavité de moulage par des ressorts (12C).
